# EUROPÄISCHE PATENTSCHRIFT

(11) **EP 1 950 916 B1**
(45) Veröffentlichungstag und Bekanntmachung des Hinweises auf die Patenterteilung: **26.08.2015**
(21) Anmeldenummer: 08000771.9
(22) Anmeldetag: 16.01.2008
(51) Int. Cl.: H04L 12/28, H04M 1/00, H04M 3/42, H04M 7/00, H04Q 1/02, H04M 11/06, H04L 12/933, H04L 12/931

(54) **Verfahren zur Datenübermittlung in einer Sprachkommunikations-Linecard, Sprachkommunikations-Linecard und Signalverarbeitungsprozessor für eine Sprachkommunikations-Linecard**
Method for transmitting data in a voice communication line card, voice communication line card and signal processor for a voice communication line card
Procédé de transmission de données dans une carte de ligne de communication orale, carte de ligne de communication orale et processeur de traitement du signal pour une carte de ligne de communication orale

(30) Priorität: 23.01.2007 DE 102007003258
(43) Veröffentlichungstag der Anmeldung: 30.07.2008
(73) Patentinhaber: Lantiq Deutschland GmbH, 85579 Neubiberg (DE)
(72) Erfinder: Fenzl, Gunther, 85579 Neubiberg (DE); Pruecklmayer, Stephan, 85635 Höhenkirchen-Siegertsbrunn (DE); Sydow, Carsten, 81547 München (DE)
(74) Vertreter: Kraus & Weisert Patentanwälte PartGmbB

(56) Entgegenhaltungen:
- EP-A1- 1 271 910
- WO-A1-01/67694
- WO-A1-99/65196
- US-A1- 2002 120 739
- US-B1- 6 483 902
- US-B1- 6 680 940

## Beschreibung

Die vorliegende Erfindung betrifft ein Verfahren zur Datenübermittlung in einer Sprachkommunikations-Linecard, eine entsprechende Sprachkommunikations-Linecard sowie einen zur Verwendung in der Sprachkommunikations-Linecard ausgestalteten Signalprozessor.

Bei Sprachkommunikationsanwendungen, insbesondere bei so genannten VoIP-Anwendungen (VoiP: Voice over Internet Protocol) - ist es bekannt, Sprachdaten paketbasiert zu übertragen. In diesem Zusammenhang können so genannte VoIP-Linecards zum Einsatz kommen, bei welchen es sich um Sprachkommunikationsvorrichtungen handelt, welche eine Verbindung von mehreren Teilnehmeranschlüssen zu einem Netzwerk herstellen. Bei den Teilnehmeranschlüssen kann es sich um Telefonanschlüsse, Faxanschlüsse oder dergleichen handeln.

Die Aufgabe der vorliegenden Erfindung besteht darin, eine Möglichkeit zur Datenübermittlung zwischen Komponenten einer Sprachkommunikations-Linecard, z.B. Signalprozessoren, zu schaffen, welche eine hohe Bandbreite für eine große Anzahl von Kommunikationskanälen bietet, mit geringem Aufwand zu implementieren ist und eine gute Skalierbarkeit bezüglich der Anzahl von Teilnehmeranschlüssen der Sprachkommunikations-Linecard aufweist.

Die EP 1 271 910 A1 beschreibt ein Kommunikationssystem mit paketvermittelter interner Datenübertragung.

Erfindungsgemäß wird diese Aufgabe gelöst durch ein Verfahren gemäß dem unabhängigen Patentanspruch 1, eine Sprachkommunikations-Linecard gemäß dem unabhängigen Patentanspruch 9 sowie einen Signalprozessor für eine Sprachkommunikations-Linecard gemäß dem unabhängigen Patentanspruch 19. Die abhängigen Patentansprüche definieren bevorzugte oder vorteilhafte Ausführungsformen der Erfindung.

Die erfindungsgemäße Lösung sieht vor, Komponenten einer Sprachkommunikations-Linecard, z.B. Signalprozessoren oder Steuerprozessoren, über eine Ethernet-Verbindung miteinander zu koppeln. Speziell ist eine Kopplung in Form einer Daisy-Chain-Anordnung vorgesehen, wobei die Komponenten zu diesem Zweck jeweils einen Ethernet-Switch umfassen können. Auf diese Weise wird für die Datenübermittlung eine hohe Bandbreite bereitgestellt. Die Verwendung eines Ethernet-Switches oder mehrerer Ethernet-Switches zur Kopplung der Komponenten gewährleistet eine geringe Signalverzögerung.

Die Erfindung wird nachfolgend unter Bezugnahme auf die beigefügten Figuren anhand von Ausführungsbeispielen näher erläutert.
Fig. 1 zeigt eine Sprachkommunikations-Linecard gemäß einem Ausführungsbeispiel der Erfindung.
Fig. 2 zeigt eine Sprachkommunikations-Linecard gemäß einem weiteren Ausführungsbeispiel der Erfindung.

Die nachfolgende Beschreibung von Ausführungsbeispielen der Erfindung dient der Erläuterung der allgemeinen Prinzipien der Erfindung, und ist nicht im einschränkenden Sinne zu verstehen. Es versteht sich, dass darin jede dargestellte oder beschriebene direkte Verbindung oder Kopplung zwischen zwei funktionalen Blöcken, Vorrichtungen, Komponenten oder anderen physikalischen oder funktionalen Einheiten auch durch eine indirekte Verbindung oder Kopplung bewerkstelligt werden könnte. Weiterhin ist es möglich, über die dargestellten Signalverbindungen mehrere physikalische oder logische Kanäle zu übertragen.

Die Erfindung wird nachstehend anhand von Ausführungsbeispielen erläutert, welche sich auf eine Sprachkommunikations-Linecard vom VoIP-Typ beziehen. Die Linecard stellt eine Vielzahl von Teilnehmeranschlüssen bereit, bei welchen es sich um analoge Telefonanschlüsse, analoge Faxanschlüsse, digitale Telefonanschlüsse vom ISDN-Typ, Datenanschlüsse vom ISDN-Typ oder dergleichen handeln kann. Es ist auch möglich, verschiedene der genannten Anschlusstypen auf einer einzigen Linecard zu kombinieren. Die Linecard bewerkstelligt eine Datenübermittlung zwischen den Teilnehmeranschlüssen und einem paketbasierten Netzwerk, z.B. über eine Ethernet-Backplane. Die Linecard ist netzwerkseitig somit für eine paketbasierte Datenübermittlung ausgestaltet. Beispielsweise kann sie für eine paketbasierte Übermittlung von Sprachdaten gemäß VoIP ausgestaltet sein.

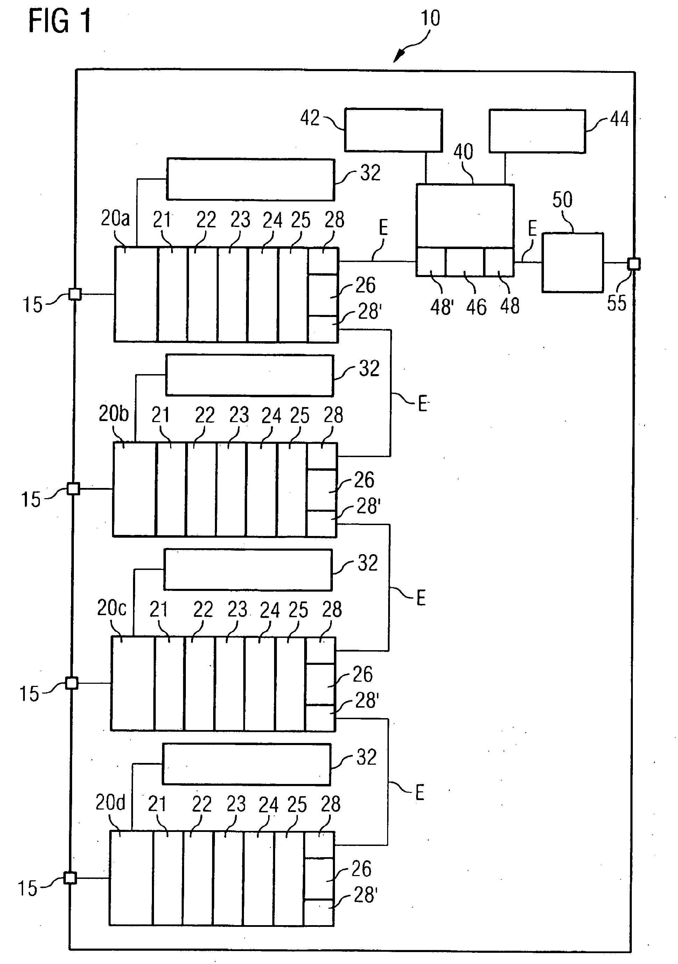

Fig. 1 zeigt schematisch eine Sprachkommunikations-Linecard 10 vom VoIP-Typ. Die Linecard 10 stellt eine Vielzahl von Teilnehmeranschlüssen bereit, bei welchen es sich beispielsweise um analoge Telefonanschlüsse, digitale Telefonanschlüsse oder dergleichen handeln kann. Zu diesem Zweck umfasst die Linecard 10 Teilnehmerschnittstellen 15, welche jeweils wenigstens einen Teilnehmeranschluss bereitstellen. Die Teilnehmerschnittstellen 15 können auch mehrere Teilnehmeranschlüsse bereitstellen, beispielsweise eine Gruppe von 16 Teilnehmeranschlüssen, so dass bei dem dargestellten Beispiel einer Linecard mit vier Teilnehmerschnittstellen 15 insgesamt 64 Teilnehmeranschlüsse vorgesehen sind.

Zur Verarbeitung von über die Teilnehmeranschlüsse übermittelten Daten, insbesondere zur Verarbeitung von Sprachdaten, umfasst die Linecard 10 eine Vielzahl von Signalprozessoren 20a, 20b, 20c, 20d. Bei den Signalprozessoren 20a, 20b, 20c, 20d handelt es sich um Komponenten der Linecard 10, welche jeweils als ein separater Halbleiterchip implementiert sein können. Den Signalprozessoren 20a, 20b, 20c, 20d ist jeweils ein Speicher 32 vom Schreib-/Lesetyp zugeordnet, z.B. ein DDR-SDRAM-Speicher.

Weiterhin ist ein Linecard-Controller 40 vorgesehen, d.h. ein Steuerprozessor, welcher zentrale Verwaltungs- und Steuerfunktionen der Linecard 10 ausübt und darüber hinaus über einen physikalischen Schnittstellenblock 50 eine Verbindung zu einer externen Netzwerk-Schnittstelle 55 der Linecard 10 bereitstellt. Die externe Netzwerk-Schnittstelle 55 ist als Ethernet-Schnittstelle ausgeführt und dient der Verbindung der Linecard 10 mit einer Ethernet-Backplane. Für den Linecard-Controller 40 sind auf der Linecard 10 Speichervorrichtungen 42 und 44 vorgesehen, beispielsweise ein nichtflüchtiger Speicher vom Flash-Typ 42 sowie ein Speicher 44 vom Schreib-/Lesetyp, beispielsweise ein DDR-SDRAM-Speicher. Der Linecard-Controller 40 kann ebenfalls als separater Halbleiterchip implementiert sein.

Die auf der Linecard 10 vorgesehenen Speicher 32, 42, 44 dienen auf übliche Weise der Speicherung von Prozessierungsdaten und/oder von Betriebscode, welcher von den Signalprozessoren 20a, 20b, 20c, 20d oder dem Linecard-Controller 40 ausgeführt wird. Es versteht sich, dass die Linecard 10 weitere Komponenten umfassen kann, welche aus Gründen der Übersichtlichkeit jedoch nicht dargestellt sind.

Zur externen Anbindung der Komponenten der Linecard 10, d.h. der Signalprozessoren 20a, 20b, 20c, 20d und des Linecard-Controllers 40, sowie zur Datenübermittlung zwischen den Komponenten der Linecard 10 sind diese über Ethernet-Verbindungen E miteinander gekoppelt. Die Ethernet-Verbindungen E können gemäß der MII-Spezifikation (MII: Media Independent Interface), der RMII-Spezifikation (RMII: Reduced Media Independent Interface), der GMII-Spezifikation (GMII: Gigabit-Media-Independent-Interface) oder der RGMII-Spezifikation (RGMII: Reduced-Gigabit-Media-Independent-Interface) ausgestaltet sein.

Zur Bereitstellung der Ethernet-Verbindungen E umfasst jeder der Signalprozessoren 20a, 20b, 20c, 20d einen Ethernet-Switch 26 mit jeweils zwei Ethernet-Schnittstellen 28, 28' für den Linecard-Controller 40 ist ebenfalls ein Ethernet-Switch 46 mit zwei Ethernet-Schnittstellen 48, 48' vorgesehen.

Mittels der Ethernet-Switches 26, 46 und der zugehörigen Ethernet-Schnittstellen 28, 28', 48, 48' sind der Linecard-Controller 40 und die Signalprozessoren 20a, 20b, 20c, 20d in einer Verkettungsanordnung (d.h. in einer so genannten Daisy-Chain-Anordnung) miteinander gekoppelt. Dies bedeutet, dass eine Ethernet-Schnittstelle 48' des Linecard-Controllers 40 mit einer ersten Ethernet-Schnittstelle 28 eines ersten Signalprozessors 20a der Verkettungsanordnung gekoppelt ist, wobei die zweite Ethernet-Schnittstelle 28' des ersten Signalprozessors 20a der Verbindung mit der ersten Ethernet-Schnittstelle 28 des nächsten Signalprozessors 20b in der Verkettungsanordnung dient. Ausgehend von der zweiten Ethernet-Schnittstelle 28' des Signalprozessors 20b erfolgt wiederum die Verbindung mit der ersten Ethernet-Schnittstelle 28 des in der Verkettungsanordnung nächsten Signalprozessors 20c. Ausgehend von der zweiten Ethernet-Schnittstelle 28' des Signalprozessors 20c erfolgt die Verbindung mit der ersten Ethernet-Schnittstelle 28 des in der Verkettungsanordnung nächsten Signalprozessors 20d. In der Verkettungsanordnung ist somit eine sequentielle Verbindung von einem Signalprozessor zu dem jeweils nächsten Signalprozessor vorgesehen, so dass jeder der Signalprozessoren 20a, 20b, 20c, 20d über die Verkettungsanordnung mit dem Linecard-Controller 40 und der externen Ethernet-Schnittstelle 55 gekoppelt ist. Im Falle des Linecard-Controllers 40 dient die erste Ethernet-Schnittstelle 48 der Kopplung mit der externen Ethernet-Schnittstelle 55, während die zweite Ethernet-Schnittstelle 48' mit der ersten Ethernet-Schnittstelle 28 des Signalpro-zessors 20a, d.h. dem ersten Signalprozessor in der Verkettungsanordnung, gekoppelt ist.

Mittels der Verkettungsanordnung und der Ethernet-Switches 26, 46 ist es somit möglich, Daten, z.B. paketbasierte Sprachdaten, von einem beliebigen der Signalprozessoren 20a, 20b, 20c, 20d zu dem Linecard-Controller 40 und zu der externen Ethernet-Schnittstelle 55 in Richtung der Ethernet-Backplane zu transportieren und umgekehrt. Weiterhin ist auch eine Übermittlung von Daten zwischen den einzelnen Signalprozessoren 20a, 20b, 20c, 20d möglich. In diesem Zusammenhang bieten die Ethernet-Verbindungen E eine hohe Bandbreite für eine Vielzahl von Kommunikationskanälen. Die Ethernet-Switches 26, 46 gewährleisten eine geringe Verzögerung bei der Datenübermittlung. Eine niedrige Verzögerung ist insbesondere bei der Übermittlung von Sprachdaten von Vorteil. Da die Verkettungsanordnung mit geringem Aufwand um weitere Komponenten ergänzt werden kann, weist das oben dargestellte Konzept zur Datenübermittlung auf einer Linecard eine gute Skalierbarkeit auf.

Im Folgenden soll der Aufbau der Signalprozessoren 20a, 20b, 20c, 20d beispielhaft anhand des Signalprozessors 20a näher erläutert werden. Bei der dargestellten Linecard 10 weisen die Signalprozessoren 20a, 20b, 20c, 20d einen identischen Aufbau auf, so dass auf eine nähere Erläuterung der Signalprozessoren 20b, 20c, 20d verzichtet werden kann. Es ist jedoch auch möglich Signalprozessoren unterschiedlichen Aufbaus auf einer Linecard 10 unter Verwendung der oben beschriebenen Konzepte miteinander zu verbinden.

Der Signalprozessor 20a verfügt über eine Vielzahl von Datenverarbeitungseinheiten 21, 22, 23, 24, 25, welche auch als Prozessorkerne bezeichnet werden können. Den Signalverarbeitungseinheiten 21, 22, 23, 24, 25 sind jeweils spezielle Aufgaben bei der Signalverarbeitung und der Verarbeitung von Datenpaketen zugewiesen, beispielsweise die Durchführung einer Echounterdrückung, die Verarbeitung von Signalisierungstönen, das Einfügen von Daten in Datenpakete, das Extrahieren von Daten aus Datenpaketen und dergleichen. Diese Aufgaben werden unter Verwendung des Speichers 32 bewerkstelligt.

Der Ethernet-Switch 26 ist als Bestandteil des Signalsprozessors 20a in Hardware implementiert, wodurch eine Unabhängigkeit der Datenübermittlung von den Signalverarbeitungskapazitäten erreicht wird, so dass auch bei hoher Auslastung des Signalprozessors eine verzögerungsfreie Datenübermittlung über den Ethernet-Switch 26 ermöglicht wird. Die Hardware des Ethernet-Switches 26 umfasst die erste Ethernet-Schnittstelle 28 und die zweite Ethernet-Schnittstelle 28' sowie eine Switching-Tabelle (nicht dargestellt). In der Switching-Tabelle ist vorgegeben, an welche der Ethernet-Schnittstellen 28, 28' über eine bestimmte Zieladresse adressierte Datenpakete geleitet werden. Die Switching-Tabelle kann auf MAC-Adressen basieren (MAC: Media Access Control), wie üblicherweise bei der hardwaremäßigen Adressierung über Ethernet verwendet. Für den Fall, dass die Linecard 10 extern, d.h. über die externe Ethernet-Schnittstelle 55, nur über eine einzige IP-Adresse (IP: Internet Protocol) identifizierbar ist, kann eine statische, d.h. unveränderliche, Switching-Tabelle verwendet werden. In anderen Fällen kann eine dynamische, z.B. durch Update-Vorgänge anpassbare, Switching-Tabelle verwendet werden.

Der Aufbau des Ethernet-Switches 46 des Linecard-Controllers 40 entspricht im Wesentlichen dem oben beschriebenen Aufbau des Ethernet-Switches 26 der Signalprozessoren 20a, 20b, 20c, 20d.

Die auf der Linecard 10 verwendeten Ethernet-Switches 26, 46 in den Signalprozessoren 20a, 20b, 20c, 20d und in dem Linecard-Controller 40 weisen somit einen identischen Aufbau auf, was die Konfiguration der Ethernet-Switches 26, 46 vereinfacht, z.B. indem eine statische Switching-Tabelle verwendet wird. Für in Richtung der externen Ethernet-Schnittstelle 55 laufende Datenpakete kann die Switching-Tabelle der einzelnen Ethernet-Switches sogar identisch sein.

Bei der in Fig. 1 dargestellten Linecard 10 kommt eine Master-Slave-Konfiguration zum Einsatz, bei welcher der zentrale Linecard-Controller 40 die Funktion einer Master-Komponente einnimmt, wohingegen die Signalprozessoren 20a, 20b, 20c, 20d die Funktion von Slave-Komponenten einnehmen, d.h. von dem Linecard-Controller 40 überwacht und gesteuert werden.

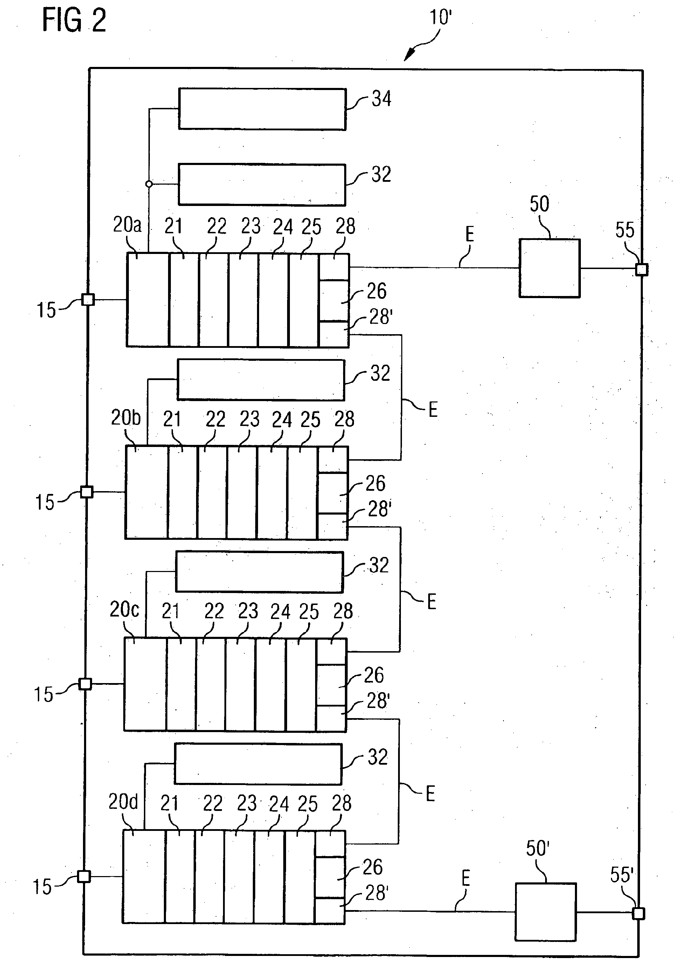

Fig. 2 zeigt eine weitere Linecard 10', bei welcher kein gesonderter Linecard-Controller vorgesehen ist. Die Linecard 10' von Fig. 2 entspricht im Wesentlichen der Linecard 10 von Fig. 1, und in Fig. 2 wurden Komponenten, welche im Wesentlichen denjenigen von Fig. 1 entsprechen, mit den gleichen Bezugszeichen bezeichnet. Im Folgenden wird auf eine wiederholte Erläuterung dieser Komponenten verzichtet und es werden lediglich die Unterschiede der Linecard 10' im Vergleich zu der Linecard 10 von Fig. 1 erläutert.

Bei der Linecard 10' übernimmt einer der Signalprozessoren 20a, 20b, 20c, 20d, im dargestellten Beispiel der Signalprozessor 20a, die Funktion einer Master-Komponente, während die anderen Signalprozessoren als Slave-Komponenten von der Master-Komponente gesteuert und überwacht werden. Die Überwachungs- und Steuerfunktionen des als Master-Komponente dienenden Signalprozessors 20a können in diesem Fall über eine der Datenverarbeitungseinheiten 21, 22, 23, 24, 25 bewerkstelligt werden.

Zur nichtflüchtigen Speicherung von Betriebscode und/oder Konfigurationsdaten ist der als Master-Komponente dienende Signalprozessor 20a neben dem Speicher 32 vom Schreib-/Lesetyp wie oben erläutert auch mit einem nichtflüchtigen Speicher 34 gekoppelt.

Bei der Linecard 10' ist die erste Ethernet-Schnittstelle 28 des in der Verkettungsanordnung ersten Signalprozessors 20a über den Schnittstellenblock 50 mit der externen Ethernet-Schnittstelle 55 gekoppelt.

Weiterhin ist bei der Linecard 10' an der zweiten Ethernet-Schnittstelle 28' des in der Verkettungsanordnung letzten Signalprozessors 20d eine weitere Verbindung zu der Ethernet-Backplane vorgesehen. Zu diesem Zweck ist die zweite Ethernet-Schnittstelle 28' des in der Verkettungsanordnung letzten Signalprozessors 20d über einen weiteren Schnittstellenblock 50' mit einer weiteren externen Ethernet-Schnittstelle 55' gekoppelt. Auf diese Weise kann die zweite Ethernet-Schnittstelle 28 des in der Verkettungsanordnung letzten Signalprozessors 20d, welche bei der Linecard 10 von Fig. 1 ungenutzt ist, zur Bereitstellung einer redundanten Verbindung zu der Ethernet-Backplane genutzt werden, und die Zuverlässigkeit der Linecard 10' wird erhöht.

Die vorliegende Erfindung ist selbstverständlich nicht auf die oben dargestellten Beispiele beschränkt. Vielmehr sind die oben dargestellten Linecards, die darin verwendeten Signalprozessoren sowie die darin verwendeten Datenübermittlungsverfahren lediglich zur Veranschaulichung der Erfindung angegeben. In diesen Ausführungsbeispielen kann eine Vielzahl von Modifikationen vorgenommen werden, ohne den Bereich der Erfindung zu verlassen. Beispielsweise könnte eine größere oder kleinere Anzahl von Signalprozessoren verwendet werden. Weiterhin könnte je nach Anwendungsbereich der Linecard eine größere oder kleinere Anzahl von Teilnehmeranschlüssen vorgesehen sein. Außerdem könnten in den Ethernet-Switches zusätzliche Ethernet-Schnittstellen vorgesehen sein, beispielsweise um in der Verkettungsanordnung Verzweigungen vorzusehen oder um die Anbindung weiterer externer Ethernet-Schnittstellen bezüglich der Ethernet-Backplane zu ermöglichen. Darüber hinaus besteht auch die Möglichkeit, die Ethernet-Switches nicht als integrale Bestandteile der Signalprozessoren und/oder des Linecard-Controllers vorzusehen, sondern als separate Komponente. Im letztgenannten Fall wäre auch eine Konfiguration einer Linecard vorstellbar, bei welcher ein zentraler Ethernet-Switch die Kopplung der Komponenten der Linecard bewerkstelligt.

Zuletzt versteht es sich, dass die oben beschriebenen Merkmale von Linecards, Signalprozessoren und Datenübermittlungsverfahren zweckmäßig miteinander kombiniert werden können, d.h. einzelne Merkmale der Ausführungsbeispiele können weggelassen werden und/oder die Merkmale verschiedener Ausführungsbeispiele können kombiniert werden.

## Patentansprüche

1. Verfahren zur Datenübermittlung in einer Sprachkommunikations-Linecard (10; 10'),
wobei Komponenten (20a, 20b, 20c, 20d, 40) der Sprachkommunikations-Linecard über eine Ethernet-Verbindung (E) miteinander gekoppelt werden,
**dadurch gekennzeichnet,**
**dass** die Komponenten (20a, 20b, 20c, 20d, 40) wenigstens einen Signalprozessor (20a, 20b, 20c, 20d, 40) zur Verarbeitung von Sprachdaten umfassen, welcher einen Ethernet-Switch (26, 46) mit wenigstens zwei Ethernet-Schnittstellen (28, 28', 48, 48') aufweist, über welche der Signalprozessor (20a, 20b, 20c, 20d, 40) in einer Daisy-Chain-Anordnung mit den weiteren Komponenten (20a, 20b, 20c, 20d, 40) der Sprachkommunkation-Linecard (10; 10') gekoppelt wird.

2. Verfahren nach Anspruch 1 oder 2,
**dadurch gekennzeichnet,**
**dass** die Komponenten (20a, 20b, 20c, 20d, 40) alle jeweils mit einem Ethernet-Switch (26, 46) versehen sind.

3. Verfahren nach Anspruch 1 oder 2,
**dadurch gekennzeichnet,**
**dass** der Ethernet-Switch (26, 46) statisch konfiguriert ist.

4. Verfahren nach einem der vorhergehenden Ansprüche,
**dadurch gekennzeichnet,**
**dass** über die Ethernet-Verbindung (E) Sprachdatenpakete übertragen werden.

5. Verfahren nach einem der vorhergehenden Ansprüche,
**dadurch gekennzeichnet,**
**dass** die Komponenten (20a, 20b, 20c, 20d) eine Vielzahl von Signalprozessoren umfassen.

6. Verfahren nach einem der vorhergehenden Ansprüche,
**dadurch gekennzeichnet,**
**dass** die Komponenten (20a, 20b, 20c, 20d, 40) eine Master-Komponente (20a; 40) und eine Vielzahl von Slave-Komponenten (20a, 20b, 20c, 20d) umfassen.

7. Verfahren nach einem der vorhergehenden Ansprüche,
**dadurch gekennzeichnet,**
**dass** die Sprachkommunikations-Linecard (10; 10') extern über eine einzige Netzwerkadresse identifizierbar ist.

8. Verfahren nach einem der vorhergehenden Ansprüche,
**dadurch gekennzeichnet,**
**dass** die Ethernet-Verbindung (E) gemäß der MII-Spezifikation, der RMII-Spezifikation, der GMII-Spezifikation oder der RGMII-Spezifikation ausgestaltet ist.

9. Sprachkommunikations-Linecard (10; 10') mit einer Vielzahl von Komponenten (20a, 20b, 20c, 20d, 40), bei der die Komponenten (20a, 20b, 20c, 20d, 40) über eine Ethernet-Verbindung (E) miteinander gekoppelt sind,
**dadurch gekennzeichnet,**
**dass** die Komponenten (20a, 20b, 20c, 20d, 40) wenigstens einen Signalprozessor (20a, 20b, 20c, 20d, 40) zur Verarbeitung von Sprachdaten umfassen, welcher einen Ethernet-Switch (26, 46) mit wenigstens zwei Ethernet-Schnittstellen (28, 28', 48, 48') aufweist, über welche der Signalprozessor (20a, 20b, 20c, 20d, 40) in einer Daisy-Chain-Anordnung mit den weiteren Komponenten (20a, 20b, 20c, 20d, 40) der Sprachkommunkation-Linecard (10; 10') gekoppelt ist.

10. Sprachkommunikations-Linecard nach Anspruch 9,
**dadurch gekennzeichnet,**
**dass** die Komponenten (20a, 20b, 20c, 20d, 40) alle jeweils einen Ethernet-Switch (26, 46) umfassen.

11. Sprachkommunikations-Linecard nach Anspruch 9 oder 10,
**dadurch gekennzeichnet,**
**dass** der Ethernet-Switch (26, 46) statisch konfiguriert ist.

12. Sprachkommunikations-Linecard (10; 10') nach einem der Ansprüche 9 bis 11,
**dadurch gekennzeichnet,**
**dass** der Ethernet-Switch (26, 46) durch Hardware implementiert ist.

13. Sprachkommunikations-Linecard (10; 10') nach einem der Ansprüche 9 bis 10,
**dadurch gekennzeichnet,**
**dass** die Komponenten (20a, 20b, 20c, 20d, 40) eine Master-Komponente (20a; 40) und eine Vielzahl von Slave-Komponenten (20a, 20b, 20c, 20d) umfassen.

14. Sprachkommunikations-Linecard (10; 10') nach einem der Ansprüche 9 bis 13,
**dadurch gekennzeichnet,**
**dass** die Komponenten (20a, 20b, 20c, 20d) eine Vielzahl von Signalprozessoren umfassen.

15. Sprachkommunikations-Linecard (10; 10') nach einem der Ansprüche 9 bis 14,
**dadurch gekennzeichnet,**
**dass** die Komponenten (20a, 20b, 20c, 20d, 40) jeweils auf einem Halbleiterchip implementiert sind.

16. Sprachkommunikations-Linecard (10; 10') nach einem der Ansprüche 9 bis 15,
**gekennzeichnet durch**,
eine externe Netzwerk-Schnittstelle (55, 55'), welche mit wenigstens einer der Komponenten (20a, 20d; 40) gekoppelt ist, wobei bei einer Datenübermittlung über die externe Ethernet-Schnittstelle (55, 55') die Sprachkommunikations-Linecard (10; 10') über eine einzige Netzwerkadresse identifizierbar ist.

17. Sprachkommunikations-Linecard (10; 10') nach einem der Ansprüche 9 bis 16,
**dadurch gekennzeichnet,**
**dass** die Ethernet-Verbindung (E) gemäß der MII-Spezifikation, der RMII-Spezifikation, der GMII-Spezifikation oder der RGMII-Spezifikation ausgestaltet ist.

18. Sprachkommunikations-Linecard (10; 10') nach einem der Ansprüche 9 bis 17,
**dadurch gekennzeichnet,**
**dass** die Sprachkommunikations-Linecard (10; 10') als VoiP-Linecard ausgestaltet ist, wobei die Ethernet-Verbindung (E) zur Übermittlung von Sprachdatenpaketen dient.

19. Signalprozessor (20a, 20b, 20c, 20d) zur Verarbeitung von Sprachdaten in einer Sprachkommunikations-Linecard (10; 10'),
aufweisend einen Ethernet-Switch (26) mit wenigstens zwei Ethernet-Schnittstellen (28, 28'), welche jeweils zur Datenübermittlung mit wenigstens einer weiteren Komponente (20a, 20b, 20c, 20d, 40) der Sprachkommunikations-Linecard (10; 10') ausgestaltet sind,
**dadurch gekennzeichnet,**
**dass** der Ethernet-Switch (26) dazu ausgestaltet ist, den Signalprozessor (20a, 20b, 20c, 20d) über die wenigstens zwei Ethernet-Schnittstellen (28, 28')in einer Daisy-Chain-Anordnung zu verbinden.

20. Signalprozessor (20a, 20b, 20c, 20d) nach Anspruch 19,
**dadurch gekennzeichnet,**
**dass** der Ethernet-Switch (26) statisch konfiguriert ist.

21. Signalprozessor (20a, 20b, 20c, 20d) nach Anspruch 19 oder 20,
**dadurch gekennzeichnet,**
**dass** der Signalprozessor (20a, 20b, 20c, 20d) mehrere Datenverarbeitungseinheiten (21, 22, 23, 24, 25) umfasst.

## Claims

1. Method for data transmission in a voice communication line card (10; 10'),
wherein components (20a, 20b, 20c, 20d, 40) of the voice communication line card are coupled to one another by means of an Ethernet link (E),
**characterized**
**in that** the components (20a, 20b, 20c, 20d, 40) comprise at least one signal processor (20a, 20b, 20c, 20d, 40) for processing voice data, which signal processor has an Ethernet switch (26, 46) having at least two Ethernet interfaces (28, 28', 48, 48') via which the signal processor (20a, 20b, 20c, 20d, 40) is coupled in a daisy-chain arrangement with the further components (20a, 20b, 20c, 20d, 40) of the voice communication line card (10; 10').

2. Method according to Claim 1,
**characterized**
**in that** the components (20a, 20b, 20c, 20d, 40) are all respectively provided with an Ethernet switch (26, 46).

3. Method according to Claim 1 or 2,
**characterized**
**in that** the Ethernet switch (26, 46) is configured statically.

4. Method according to one of the preceding claims,
**characterized**
**in that** the Ethernet link (E) is used to transmit voice data packets.

5. Method according to one of the preceding claims,
**characterized**
**in that** the components (20a, 20b, 20c, 20d) comprise a multiplicity of signal processors.

6. Method according to one of the preceding claims,
**characterized**
**in that** the components (20a, 20b, 20c, 20d, 40) comprise a master component (20a; 40) and a multiplicity of slave components (20a, 20b, 20c, 20d).

7. Method according to one of the preceding claims,
**characterized**
**in that** the voice communication line card (10; 10') can be identified externally by means of a single network address.

8. Method according to one of the preceding claims,
**characterized**
**in that** the Ethernet link (E) is designed on the basis of the MII specification, the RMII specification, the GMII specification or the RGMII specification.

9. Voice communication line card (10; 10') having a multiplicity of components (20a, 20b, 20c, 20d, 40), in which line card the components (20a, 20b, 20c, 20d, 40) are coupled to one another by means of an Ethernet link (E),
**characterized**
**in that** the components (20a, 20b, 20c, 20d, 40) comprise at least one signal processor (20a, 20b, 20c, 20d, 40) for processing voice data, which signal processor has an Ethernet switch (26, 46) having at least two Ethernet interfaces (28, 28', 48, 48') via which the signal processor (20a, 20b, 20c, 20d, 40) is coupled in a daisy-chain arrangement with the further components (20a, 20b, 20c, 20d, 40) of the voice communication line card (10; 10').

10. Voice communication line card according to Claim 9,
**characterized**
**in that** the components (20a, 20b, 20c, 20d, 40) all respectively comprise an Ethernet switch (26, 46).

11. Voice communication line card according to Claim 9 or 10,
**characterized**
**in that** the Ethernet switch (26, 46) is configured statically.

12. Voice communication line card (10; 10') according to one of Claims 9 to 11,
**characterized**
**in that** the Ethernet switch (26, 46) is implemented by hardware.

13. Voice communication line card (10; 10') according to one of Claims 9 to 10,
**characterized**
**in that** the components (20a, 20b, 20c, 20d, 40) comprise a master component (20a; 40) and a multiplicity of slave components (20a, 20b, 20c, 20d).

14. Voice communication line card (10; 10') according to one of Claims 9 to 13,
**characterized**
**in that** the components (20a, 20b, 20c, 20d) comprise a multiplicity of signal processors.

15. Voice communication line card (10; 10') according to one of Claims 9 to 14,
**characterized**
**in that** the components (20a, 20b, 20c, 20d, 40) are respectively implemented on a semiconductor chip.

16. Voice communication line card (10; 10') according to one of Claims 9 to 15,
**characterized by**
an external network interface (55, 55') which is coupled to at least one of the components (20a, 20d; 40), with a data transmission via the external Ethernet interface (55, 55') involving the voice communication line card (10; 10') being able to be identified by means of a single network address.

17. Voice communication line card (10; 10') according to one of Claims 9 to 16,
**characterized**
**in that** the Ethernet link (E) is designed on the basis of the MII specification, the RMII specification, the GMII specification or the RGMII specification.

18. Voice communication line card (10; 10') according to one of Claims 9 to 17,
**characterized**
**in that** the voice communication line card (10; 10') is in the form of a VoIP line card, with the Ethernet link (E) being used to transmit voice data packets.

19. Signal processor (20a, 20b, 20c, 20d) for processing voice data in a voice communication line card (10; 10'), having an Ethernet switch (26) with at least two Ethernet interfaces (28, 28') which are respectively designed for data transmission with at least one further component (20a, 20b, 20c, 20d, 40) of the voice communication line card (10; 10'),
**characterized**
**in that** the Ethernet switch (26) is designed to connect the signal processor (20a, 20b, 20c, 20d) in a daisy-chain arrangement via the at least two Ethernet interfaces (28, 28').

20. Signal processor (20a, 20b, 20c, 20d) according to Claim 19,
**characterized**
**in that** the Ethernet switch (26) is configured statically.

21. Signal processor (20a, 20b, 20c, 20d) according to Claim 19 or 20,
**characterized**
**in that** the signal processor (20a, 20b, 20c, 20d) comprises a plurality of data processing units (21, 22, 23, 24, 25).

## Revendications

1. Procédé de transmission de données dans une carte de ligne de communication vocale (10 ; 10'), dans lequel des composants (20a, 20b, 20c, 20d, 40) de la carte de ligne de communication vocale sont couplés les uns aux autres par l'intermédiaire d'une liaison Ethernet (E),
**caractérisé en ce que** les composants (20a, 20b, 20c, 20d, 40) comprennent au moins un processeur de signal (20a, 20b, 20c, 20d, 40) pour traiter des données vocales, lequel le processeur de signal comporte un commutateur Ethernet (24, 46) ayant au moins deux interfaces Ethernet (28, 28', 48, 48') par l'intermédiaire desquelles le processeur de signal (20a, 20b, 20c, 20d, 40) est couplé dans un agencement en guirlande aux autres composants (20a, 20b, 20c, 20d, 40) de la carte de ligne de communication vocale (10 ; 10').

2. Procédé selon la revendication 1,
**caractérisé en ce que** les composants (20a, 20b, 20c, 20d, 40) sont tous dotés d'un commutateur Ethernet (26, 46).

3. Procédé selon la revendication 1 ou 2,
**caractérisé en ce que** le commutateur Ethernet (26, 46) est configuré de manière statique.

4. Procédé selon l'une quelconque des revendications précédentes,
**caractérisé en ce que** des paquets de données vocales sont transmis par l'intermédiaire de la liaison Ethernet (E).

5. Procédé selon l'une quelconque des revendications précédentes,
**caractérisé en ce que** les composants (20a, 20b, 20c, 20d) comprennent une pluralité de processeurs de signaux.

6. Procédé selon l'une quelconque des revendications précédentes,
**caractérisé en ce que** les composants (20a, 20b, 20c, 20d, 40) comprennent un composant maître (20a ; 40) et une pluralité de composants esclaves (20a, 20b, 20c, 20d).

7. Procédé selon l'une quelconque des revendications précédentes,
**caractérisé en ce que** la carte de ligne de communication vocale (10 ; 10') peut être identifiée extérieurement par l'intermédiaire d'une adresse de réseau unique.

8. Procédé selon l'une quelconque des revendications précédentes,
**caractérisé en ce que** la liaison Ethernet (E) est réalisée conformément à la spécification MII, à la spécification RMII, à la spécification GMII ou à la spécification RGMII.

9. Carte de ligne de communication vocale (10 ; 10') comportant une pluralité de composants (20a, 20b, 20c, 20d, 40), dans laquelle les composants (20a, 20b, 20c, 20d, 40) sont couplés les uns aux autres par l'intermédiaire d'une liaison Ethernet (E),
**caractérisée en ce que** les composants (20a, 20b, 20c, 20d, 40) comprennent au moins un processeur de signal (20a, 20b, 20c, 20d, 40) pour traiter des données vocales, lequel le processeur de signal comporte un commutateur Ethernet (24, 46) ayant au moins deux interfaces Ethernet (28, 28', 48, 48') par l'intermédiaire desquelles le processeur de signal (20a, 20b, 20c, 20d, 40) est couplé dans un agencement en guirlande aux autres composants (20a, 20b, 20c, 20d, 40) de la carte de ligne de communication vocale (10 ; 10').

10. Carte de ligne de communication vocale selon la revendication 9,
**caractérisée en ce que** les composants (20a, 20b, 20c, 20d, 40) comprennent tous respectivement un commutateur Ethernet (26, 46).

11. Carte de ligne de communication vocale selon la revendication 9 ou 10,
**caractérisée en ce que** le commutateur Ethernet (26, 46) est configuré de manière statique.

12. Carte de ligne de communication vocale (10 ; 10') selon l'une quelconque des revendications 9 à 11,
**caractérisée en ce que** le commutateur Ethernet (26, 46) est mis en oeuvre sous forme de matériel.

13. Carte de ligne de communication vocale (10 ; 10') selon l'une quelconque des revendications 9 à 10,
**caractérisée en ce que** les composants (20a, 20b, 20c, 20d, 40) comprennent un composant maître (20a ; 40) et une pluralité de composants esclaves (20a, 20b, 20c, 20d).

14. Carte de ligne de communication vocale (10 ; 10') selon l'une quelconque des revendications 9 à 13,
**caractérisée en ce que** les composants (20a, 20b, 20c, 20d) comprennent une pluralité de processeurs de signaux.

15. Carte de ligne de communication vocale (10 ; 10') selon l'une quelconque des revendications 9 à 14,
**caractérisée en ce que** les composants (20a, 20b, 20c, 20d, 40) sont respectivement réalisés sous la forme d'une puce à semi-conducteur.

16. Carte de ligne de communication vocale (10 ; 10') selon l'une quelconque des revendications 9 à 15,
**caractérisée par** une interface de réseau externe (55, 55'), qui est couplée à au moins l'un des composants (20a, 20d ; 40), dans laquelle, lors d'une transmission de données par l'intermédiaire de l'interface Ethernet (55, 55'), la carte de ligne de communication vocale (10 ; 10') peut être identifiée par l'intermédiaire d'une adresse de réseau unique.

17. Carte de ligne de communication vocale (10 ; 10') selon l'une quelconque des revendications 9 à 15,
**caractérisée en ce que** la liaison Ethernet (E) est réalisée conformément à la spécification MII, à la spécification RMII, à la spécification GMII ou à la spécification RGMII.

18. Carte de ligne de communication vocale (10 ; 10') selon l'une quelconque des revendications 9 à 17,
**caractérisée en ce que** la carte de ligne de communication vocale (10 ; 10') est réalisée sous la forme d'une carte de ligne VoIP, dans laquelle la liaison Ethernet (E) est destinée à la transmission de paquets de données vocales.

19. Processeur de signal (20a, 20b, 20c, 20d) destiné à traiter des données vocales dans une carte de ligne de communication vocale (10 ; 10'),
comportant un commutateur Ethernet (26) ayant au moins deux interfaces Ethernet (28, 28') qui sont respectivement conçues pour transmettre des données au moyen d'au moins un autre composant (20a, 20b, 20c, 20d, 40) de la carte de ligne de communication vocale (10 ; 10'),
**caractérisé en ce que** le commutateur Ethernet (26) est conçu pour relier le processeur de signal (20a, 20b, 20c, 20d) par l'intermédiaire des au moins deux interfaces Ethernet (28, 28') dans un agencement en guirlande.

20. Processeur de signal (20a, 20b, 20c, 20d) selon la revendication 19,
**caractérisé en ce que** le commutateur Ethernet (26) est configuré de manière statique.

21. Processeur de signal (20a, 20b, 20c, 20d) selon la revendication 19 ou 20,
**caractérisé en ce que** le processeur de signal (20a, 20b, 20c, 20d) comprend plusieurs unités de traitement de données (21, 22, 23, 24, 25).
